# EUROPEAN PATENT SPECIFICATION

(11) **EP 3 793 898 B1**
(45) Date of publication and mention of the grant of the patent: **05.11.2025**
(21) Application number: 19804546.0
(22) Date of filing: 17.05.2019
(51) Int. Cl.: B64C 29/04, F02C 6/20, F02K 1/00

(54) **COMBINATION COMPRESSED-FLUID EJECTOR AND PROPELLER PROPULSION SYSTEM**
KOMBINATION AUS DRUCKFLÜSSIGKEITSEJEKTOR UND PROPELLERANTRIEBSSYSTEM
ÉJECTEUR DE FLUIDE COMPRIMÉ ET SYSTÈME DE PROPULSION À HÉLICE COMBINÉS

(30) Priority: 17.05.2018 US 201862673094 P
(43) Date of publication of application: 24.03.2021
(60) Divisional application: 25205926.6
(73) Proprietor: Jetoptera, Inc., Edmonds, WA 98020 (US)
(72) Inventor: EVULET, Andrei, Edmonds, Washington 98020 (US)
(74) Representative: Beck Greener LLP
(86) International application number: PCT/US2019/032988
(87) International publication number: WO 2019/222702

(56) References cited:
- WO-A2-2017/209820
- WO-A2-2017/209820
- US-A- 2 939 649
- US-A- 3 388 878
- US-A- 3 388 878
- US-A- 5 209 428
- US-A- 5 246 188
- US-A- 5 275 356
- US-A1- 2005 223 695
- US-A1- 2005 223 695
- US-A1- 2013 062 455
- US-A1- 2017 159 565
- US-B1- 6 547 180
- US-B2- 8 382 030

## Description

### PRIORITY CLAIM

This patent application claims priority from U.S. Provisional Patent Application No. 62/673,094 filed May 17, 2018.

### BACKGROUND

For VTOL and STOL aircraft, what is needed are levels of performance with better footprint, lower VTOL noise, more compact landing-space requirements, better reliability and operating costs. US 3,388,878 discloses a VTOL aircraft having a plurality of fuselage-mounted jet engine driven lift fans to provide symmetrical lift about the aircraft's center of gravity. US 2005/223695 discloses a thrust vector control system for a plug nozzle rocket engine for propelling and maneuvering a vehicle. US2017/159565 discloses a micro-turbine that also operates as a gas generator and produces several streams of pressurized, hot gases into ejectors and creates force for use in all phases of flight. WO2017/209820 discloses a vehicle having a main body and a fluid generator coupled to the main body and producing a fluid stream. At least one fore conduit and at least one tail conduit are fluidly coupled to the generator. US 2013/062455 discloses a fixed-wing VTOL aircraft featuring an array of electric lift fans distributed over the surface of the aircraft. A generator is selectively coupled to the gas turbine engine of the aircraft. US 2,939,649 discloses an aircraft comprising at least two fans mounted with their axes substantially vertical and arranged to discharge air streams in a downward direction so as to impart an upward component of thrust to the aircraft, one fan being mounted forward and one aft of the centre of gravity of the aircraft, means being provided for varying the thrust produced by one fan relative to the thrust produced by the other. US 5,275,356 discloses a gas-driven ducted lift fan mounted in an aircraft for providing thrust in the vertical flight mode. A turbofan engine is mounted in the aircraft that comprises a fan section for providing thrust in the horizontal flight mode and a turboshaft engine having an output drive shaft coupled to the fan section for driving the same. US 8,382,030 discloses a VTOL aircraft powerplant selectable between a low-power, turbofan mode during cruise flight and a high-power, lift fan mode during vertical flight. US 5,246,188 discloses an aircraft having vertical take-off and landing capability and including a power-generating mechanism, a propulsion-developing mechanism, and laterally extending wings. Each wing includes an aerodynamically composite airfoil having a lower camber possessing an aerodynamic thrust-flap.

### BRIEF DESCRIPTION OF THE DRAWING FIGURES

FIG. 1 illustrates a top view of an embodiment of the present invention;
FIG. 2 is a rear view of the embodiment of the present invention shown in FIG. 1;
FIG. 3 is a front view of the embodiment of the present invention shown in FIG. 1;
FIG. 4. illustrates an embodiment of the present invention in rear perspective view; and
FIG. 5 illustrates a propulsion system according to an embodiment the present invention in top perspective view.

### DETAILED DESCRIPTION

This patent application is intended to describe one or more embodiments of the present invention. It is to be understood that the use of absolute terms, such as "must," "will," and the like, as well as specific quantities, is to be construed as being applicable to one or more of such embodiments, but not necessarily to all such embodiments. Changes and modifications may be made without departing from the invention, which is defined by the appended claims.

According to an aspect of the present invention, there is provided a propulsion system as defined in claim 1. Embodiments are defined in the dependent claims. One or more embodiments provide architecture allowing a switch from a Fluidic Propulsive System (FPS) thruster/ejector to a turboprop and vice versa, the features of blocking a turbine to feed gases to a fluidic thruster and vice versa, the modus operandum of the aircraft VTOL and STOL procedures, fuel savings for a VTOL aircraft, simplicity compared to complicated swiveling turboprops, compactness and integration including weight savings of such system compared to tilt rotors, aircraft dynamics advantages by segregating the VTOL system from the horizontal flight by simple closing and opening of valves. This system may allow the aircraft unprecedented levels of performance with better footprint, lower VTOL noise and more compact landing-space requirements, better reliability and operating costs because of simpler mechanisms.

An embodiment includes a gas generator connected fluidically with at least one thruster having a variable faceplate that can close completely, thereby forcing the flow of the gas produced by the gas generator over a turbine. The gas generator may be connected to a turbine in the center of the aircraft, which has a nozzle to accelerate and expand the hot, pressurized gas from the gas generator into a turbine, after which exhaust gases are expelled out of the system via exhaust ports 540.

At one extreme a valve entirely blocks the passage to the turbine forcing the gas to be directed towards the fluidic thruster and generating vertical force using augmentation ratios exceeding, for example, 2: 1. In this instance (VTOL phase), the flow to the turbine may be blocked by a closed valve, or plugs, so the turbine is not rotating and therefore the propeller is likewise not rotating. As the aircraft ascends using the FPS thrusters, the faceplates on said thrusters are beginning to close, forcing the gas to accelerate over the Coanda surface and increase thrust to a point at which the airplane is airborne and high enough to begin the transition. Transition is marked by unblocking the flow over the turbine via slowly opening the valve to the turbine and/or slowly removing the plugs/obstructions on the exhaust ports 540 from the turbine and pulling the brake off the turbine- the turbine accelerates and starts driving the propeller. According to the invention, the turbine and propeller are connected to each other mechanically via a gear mechanism to drive the correct RPM (reduction gear) from a high RPM of the turbine to the low RPM of the large propeller. While the faceplates continue to close, the thrusters produce the same thrust to keep the aircraft airborne, the plane becomes lighter due to the bum of fuel and the propeller starts moving the airplane forward so the airframe starts producing lift.

At a range of between 30-60 knots, for example, the plane is producing enough lift to stay airborne and the propeller can switch to cruise condition via throttling back the gas generator (less gas sent to the turbine) and the fluidic thrusters are completely shut by faceplates being fully shut. Any passage of hot gas is thus forced to go through the turbine. The converse is used for landing vertically, if desired; the turbine valve starts closing while the faceplates of the thrusters open up allowing hot gas to be injected through the slots formed in the thrusters between faceplates and Coanda surface. The aircraft forward speed slows down while the thrusters start generating enough thrust for vertical landing, with the propeller/shaft/gear/shaft/turbine fully blocked at landing. Fully opened thrusters produce via FPS enough thrust for slow descent and landing.

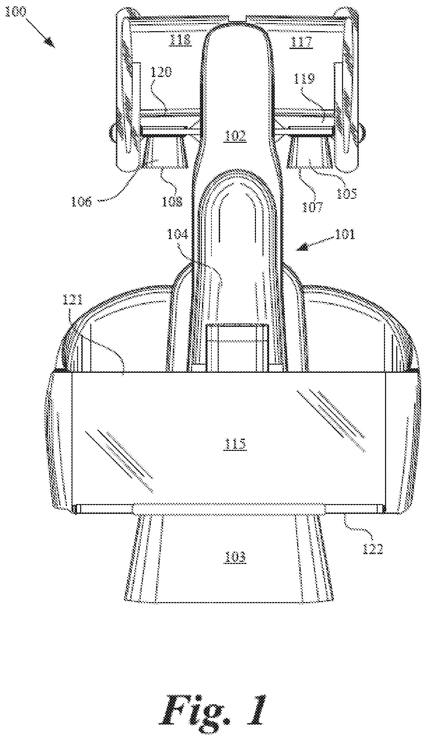

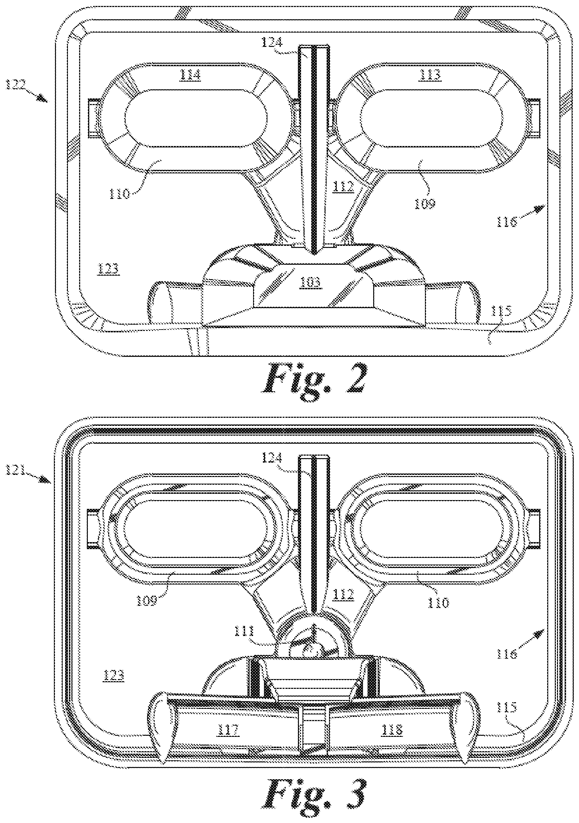

FIGS. 1-3 illustrate a vehicle 100 according to an embodiment of the invention from different perspective views. In FIGS. 1-4, the vehicle 100 has a jet augmenting propulsive system with particular emphasis on VTOL capabilities. More specifically, vehicle 100 includes a main body 101 having a fore portion 102 and a tail portion 103. Main body 101 may include a cockpit portion (not shown) configured to enable manned operation of the vehicle 100. As with all flying/sailing craft, vehicle 100 has a starboard side and a port side. A fluid generator 104 is coupled to the main body 101 and produces a fluid stream. In an embodiment, the fluid generator 104 is disposed in the main body 101. At least one fore conduit (111 in FIG. 3) and at least one tail conduit 112 are fluidly coupled to the generator 104.

First and second fore ejectors 105, 106 are fluidly coupled to the at least one fore conduit 111, coupled to the fore portion 102 and respectively coupled to the starboard side and port side. The fore ejectors 105, 106 respectively include outlet structure 107, 108 out of which fluid from the at least one fore conduit 111 flows at a predetermined adjustable velocity. Additionally, the entirety of each of the fore ejectors 105, 106 is rotatable about an axis oriented parallel to the leading edges of the fore ejectors (i.e., transverse axis) to provide thrust orientation with both forward and upward components, for example, allowing the vehicle 100 to take off and continue climbing at much steeper angles of attack and hence reducing the runway length needed. At the end of the climb or during the climb, the fore ejectors 105, 106 can be realigned to the main direction of flight or shut off completely by turning off the bleed valves of the engine/gas generator 104 and adapting the speed and operation of the gas generator accordingly, driving the rear propulsion system (e.g., tail ejectors 109, 110). After landing, the fore ejectors 105, 106 can be swiveled 180 degrees to provide a thrust reverse against the direction of the landing, shortening the landing length. In an embodiment, the entirety of each of the fore ejectors 105, 106 is rotatable about an axis oriented perpendicular to the leading edges of the fore ejectors.

First and second tail ejectors 109, 110 is fluidly coupled to the at least one tail conduit 112 and coupled to the tail portion 103. The tail ejectors 109, 110 include outlet structure 113, 114 out of which fluid from the at least one tail conduit 112 flows at a predetermined adjustable velocity. Additionally, the entirety of each of the tail ejectors 109, 110 is rotatable about an axis oriented parallel to the leading edges of the tail ejectors (i.e., transverse axis). In an embodiment, the entirety of each of the tail ejectors 109, 110 is rotatable about an axis oriented perpendicular to the leading edges of the tail ejectors.

In an embodiment, the fluid generator 104 includes a first region in which the fluid stream is at a low temperature and a second region in which the fluid stream is at a high temperature. The at least one fore conduit 111 provides fluid from the first region to the fore ejectors 105, 106, and the at least one tail conduit 112 provides fluid from the second region to the tail ejectors 109, 110.

A primary airfoil element 115 is coupled to the tail portion 103. Element 115 is located directly downstream of the fore ejectors 105, 106 such that the fluid from the fore ejectors over at least one aerodynamic surface of the primary airfoil element. According to the invention, the primary airfoil element 115 is a closed wing having a leading edge 121 and a trailing edge 122, the leading and trailing edges of the closed wing defining an interior region 123. Tail ejectors 109, 110 are at least partially disposed within the interior region 123 (i.e., between leading edge 121 and trailing edge 122) and are controllably movable (e.g., advancement, retraction, etc.) within the interior region relative to the airfoil element 115. As such, a shroud is formed by primary airfoil element 115 around the tail ejectors 109, 110, thereby forming a macro-ejector.

The vehicle 100 further includes first and second canard wings 117, 118 coupled to the fore portion 102 and respectively coupled to the starboard side and port side. The canard wings 117, 118 are configured to develop boundary layers of ambient air flowing over the canard wings when the vehicle 100 is in motion. The canard wings 117, 118 are respectively located directly upstream of the fore ejectors 105, 106 such that the fore ejectors are fluidly coupled to the boundary layers. The fore ejectors 105, 106 respectively include inlet portions (i.e., leading edges) 119, 120, and the fore ejectors are positioned such that the boundary layers are ingested by the inlet portions.

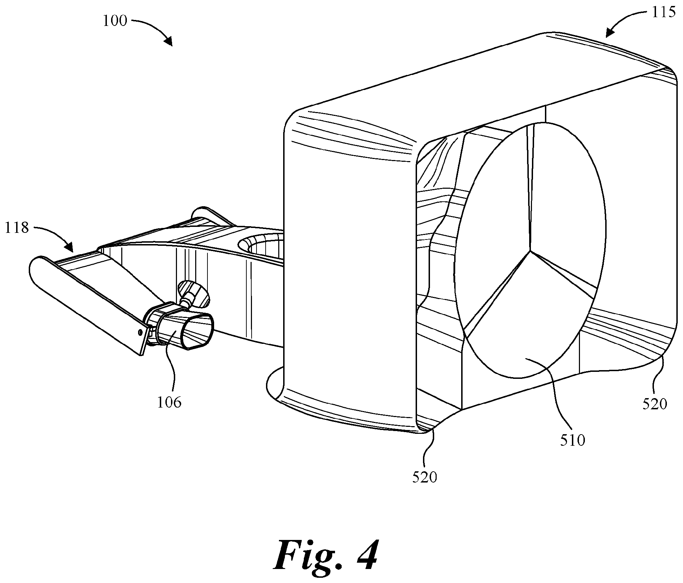

FIG. 4 illustrates the vehicle 100 in rear perspective view. Vehicle 100 includes a turbo-propeller propulsive system with particular emphasis on short take-off and landing (STOL) capabilities. Vehicle 100 includes a propeller 510 driven by a turbine 511, which is in turn powered by fluid generator 104. An embodiment can include a support assembly 520, such as legs or other appropriate device, that provide support to vehicle 500 such that there is enough space and/or offset between the propeller 510 and a landing/takeoff surface when the vehicle 500 is at rest. Support assembly 520 preferably extends from the tail portion 103 and is substantially parallel to the main body 101.

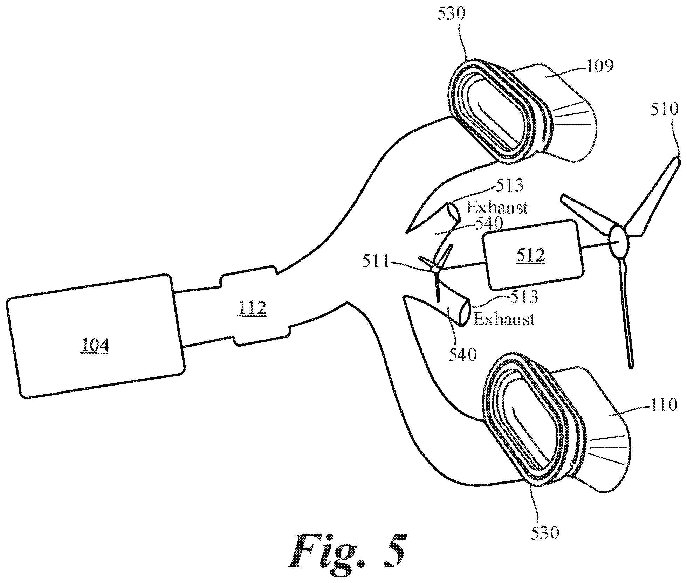

One or more embodiments primarily use a fluidic propulsive system (FPS) thruster/ejector for VTOL or STOL maneuvers. Exemplary FPS systems are described in U.S. Patent Application Nos. 15/456,450, 15/221,389 and 15/256,178, for example. As best shown in FIG. 5, hot gases from gas generator 104 can be redirected from FPS thrusters 109, 110 to flow over the free turbine 511 that is mechanically connected to a gear 512 and the propeller 510. Such a system includes one or more plugs 513 or other blocking elements that block flow from the generator 104 to the turbine/propeller 511, 510 at takeoff so that the aircraft 100 gains altitude during liftoff using only the FPS thrusters 109, 110, which receive the compressed fluid from the generator 104 via conduit 112 and are directed vertically to ground to enable vertical flight and may be able to swivel between vertical and horizontal positions. During a transition period after vehicle liftoff, generator gases are allowed to flow into both the thrusters 109, 110 and the turbine 511, the latter of which is consequently accelerated. The faceplates 530 on the FPS thrusters 109, 110 (or other obstructive device/system serving a similar purpose) may begin slowly closing, and at a predetermined altitude the aircraft 100 will have directed all generator gas flow into the turbine 511, driving the propeller 510 and moving the aircraft forward at increasing speeds. By the time the FPS thrusters 109, 110 are completely shut via, for example, faceplates 530 closing all passages feeding the Coanda surfaces of the thrusters, the entire mass flow rate from the gas generator 104 is directed over the turbine 511 driving the propeller 510. To the exclusion of the thrusters109, 110, the aircraft 100 has a speed to support lift itself (e.g., 40-50 knots) without the use of the thrusters, and the throttle can be dialed back for economic advantage, with the propeller 510 at cruise condition and the entire system acting as a turboprop. The fuel economy may be half that of the FPS thrusters in level flight.

Although the foregoing text sets forth a detailed description of numerous different embodiments, it should be understood that the scope of protection is defined by the words of the claims to follow. The detailed description is to be construed as exemplary only and does not describe every possible embodiment because describing every possible embodiment would be impractical, if not impossible. Numerous alternative embodiments could be implemented, using either current technology or technology developed after the filing date of this patent, which would still fall within the scope of the claims.

Thus, many modifications and variations may be made in the techniques and structures described and illustrated herein. Accordingly, it should be understood that the methods and apparatus described herein are illustrative only and are not limiting upon the scope of the claims insofar as they fall within the scope of the appended claims.

## Claims

1. A propulsion system, comprising:
a source (104) of compressed fluid;
at least one tail ejector (109, 110) in fluid communication with the source (104);
a primary airfoil element (115) comprising a closed wing having a leading edge (121) and a trailing edge (122), the leading and trailing edges of the closed wing defining an interior region (123), wherein the at least one tail ejector (109, 110) is at least partially disposed within the interior region (123);
at least one turbine (511) in fluid communication with the source (104) and mechanically connected to a propeller (510) by means of a gear mechanism (512); and
an apparatus (513, 530) for selectively providing the compressed fluid to one or both of the at least one tail ejector (109, 110) and the at least one turbine (511).

2. The propulsion system of claim 1, wherein the apparatus comprises at least one exhaust port (540) and at least one plugging device (513) that is controllably operable to open and close the at least one exhaust port (540).

3. The propulsion system of claim 1, wherein the apparatus comprises at least one obstructive device (530) coupled to the at least one tail ejector (109, 110) that is controllably operable to enable and disable fluid flow from the source (104) to the at least one tail ejector (109, 110).

4. The propulsion system of claim 1, wherein the entirety of the at least one tail ejector (109, 110) is rotatable about an axis oriented parallel to the leading edge of the at least one tail ejector (109, 110).

5. An aircraft (100) comprising the propulsion system of any one of claims 1 to 4.

## Patentansprüche

1. Antriebssystem, umfassend:
eine Quelle (104) für komprimiertes Fluid;
mindestens einen Heckauswerfer (109, 110) in Fluidverbindung mit der Quelle (104);
ein primäres Tragflächenelement (115), das eine geschlossene Tragfläche umfasst, die eine Vorderkante (121) und einer Hinterkante (122) aufweist, wobei die Vorder- und Hinterkante der geschlossenen Tragfläche einen Innenbereich (123) definieren, in dem der mindestens eine Heckauswerfer (109, 110) mindestens teilweise angeordnet ist;
mindestens eine Turbine (511), die in Fluidverbindung mit der Quelle (104) steht und über einen Getriebemechanismus (512) mit einem Propeller (510) verbunden ist; und
eine Vorrichtung (513, 530) zum selektiven Bereitstellen des komprimierten Fluids an eines oder beide von dem mindestens einen Heckauswerfer (109, 110) und der mindestens einen Turbine (511).

2. Antriebssystem nach Anspruch 1, wobei die Vorrichtung mindestens eine Auslassöffnung (540) und mindestens eine Verschlussvorrichtung (513) umfasst, die steuerbar betätigt werden kann, um die mindestens eine Auslassöffnung (540) zu öffnen und zu schließen.

3. Antriebssystem nach Anspruch 1, wobei die Vorrichtung mindestens eine Absperrvorrichtung (530) umfasst, die mit dem mindestens einen Heckauswerfer (109, 110) gekoppelt ist und steuerbar betätigt werden kann, um den Fluidstrom von der Quelle (104) zu dem mindestens einen Heckauswerfer (109, 110) zu aktivieren und zu deaktivieren.

4. Antriebssystem nach Anspruch 1, wobei der mindestens eine Heckauswerfer (109, 110) in seiner Gesamtheit um eine Achse drehbar ist, die parallel zu der Vorderkante des mindestens einen Heckauswerfers (109, 110) ausgerichtet ist.

5. Luftfahrzeug (100), umfassend das Antriebssystem nach einem der Ansprüche 1 bis 4.

## Revendications

1. Système de propulsion, comprenant :
une source (104) de fluide comprimé;
au moins un éjecteur arrière (109, 110) en communication fluidique avec la source (104);
un élément de voilure primaire (115) comprenant une aile fermée ayant un bord d'attaque (121) et un bord de fuite (122), les bords d'attaque et de fuite de l'aile fermée définissant une région intérieure (123), dans lequel l'au moins un éjecteur arrière (109, 110) est au moins partiellement disposé à l'intérieur de la région intérieure (123);
au moins une turbine (511) en communication fluidique avec la source (104) et reliée mécaniquement à une hélice (510) au moyen d'un mécanisme d'engrenage (512) ; et
un appareil (513, 530) pour fournir de manière sélective le fluide comprimé à l'un ou aux deux de l'au moins un éjecteur arrière (109, 110) et l'au moins une turbine (511).

2. Système de propulsion de la revendication 1, dans lequel l'appareil comprend au moins un orifice d'échappement (540) et au moins un dispositif d'obturation (513) qui peut être actionné de manière contrôlable pour ouvrir et fermer l'au moins un orifice d'échappement (540).

3. Système de propulsion de la revendication 1, dans lequel l'appareil comprend au moins un dispositif d'obstruction (530), couplé à l'au moins un éjecteur arrière (109, 110), qui peut être actionné de manière contrôlable pour activer et désactiver un écoulement de fluide depuis la source (104) vers l'au moins un éjecteur arrière (109, 110).

4. Système de propulsion de la revendication 1, dans lequel l'intégralité de l'au moins un éjecteur arrière (109, 110) peut tourner autour d'un axe orienté parallèlement au bord d'attaque de de l'au moins un éjecteur arrière (109, 110).

5. Aéronef (100) comprenant le système de propulsion de l'une quelconque des revendications 1 à 4.
